**Europäisches Patentamt**

**European Patent Office**

**Office européen des brevets**

(19)

(11) Veröffentlichungsnummer : **0 407 408 B1**

(12) **EUROPÄISCHE PATENTSCHRIFT**

(45) Veröffentlichungstag der Patentschrift :
26.08.92 Patentblatt 92/35

(51) Int. Cl.$^5$ : **E21B 43/00**

(21) Anmeldenummer : **89903145.4**

(22) Anmeldetag : **13.03.89**

(86) Internationale Anmeldenummer :
**PCT/EP89/00264**

(87) Internationale Veröffentlichungsnummer :
**WO 89/09323 05.10.89 Gazette 89/24**

(54) **VERFAHREN UND VORRICHTUNG ZUR ENERGIEGEWINNUNG AUS ÖLQUELLEN.**

(30) Priorität : **31.03.88 DE 3810951**

(43) Veröffentlichungstag der Anmeldung :
**16.01.91 Patentblatt 91/03**

(45) Bekanntmachung des Hinweises auf die
Patenterteilung :
**26.08.92 Patentblatt 92/35**

(84) Benannte Vertragsstaaten :
**AT CH DE FR GB IT LI NL SE**

(56) Entgegenhaltungen :
**US-A- 4 134 024**
**US-A- 4 248 305**
**US-A- 4 273 189**

(73) Patentinhaber : **KSB Aktiengesellschaft**
**Johann-Klein-Strasse 9**
**W-6710 Frankenthal (DE)**

(72) Erfinder : **HOFMANN, Heinrich**
**Zum Trappenberg 34**
**W-6520 Worms 23 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft eine der Mündung einer Quelle gasbeladenen Erdöls nachgeschaltete Vorrichtung, die mindestens eine Turbine bzw. eine Turbinenstufe und einen von dieser angetriebenen Generator umfaßt, durch welche ein Teil der in dem aus der Quelle austretenden Erdöl in Form eines Drucküberschusses enthaltenen Energie in elektrische Energie umgewandelt wird, in der weiterhin eine Einrichtung zur Trennung des im Druck reduzierten Erdöls vom darin enthaltenen Gas vorgesehen ist und in der schließlich mindestens eine Pumpenstufe zur Förderung entgasten Erdöls vorhanden ist, welche durch dem austretenden Erdöl entzogene Energie angetrieben wird.

Zwischen den verschiedenen Erdölquellen ergeben sich erhebliche Unterschiede bezüglich des Förderprodukts und der Förderbedingungen. So unterscheiden sich vor allem die Anteile an Erdöl und Erdgas sowie der an der Quelle anstehende Druck des Förderproduktes. Die für das Produkt maßgeblichen Parameter ändern sich aber auch während des Zeitraumes der Förderung. Die notwendige Berücksichtigung dieser Umstände erfordert vor allem bei der unterseeischen Förderung eine besondere Sorgfalt, da das Bohrloch selbst nur schwer zugänglich ist.

Bei Ölquellen, die unter einem Überdruck stehen, ist es bisher üblich, das vor allem aus Öl und Gas bestehende Förderprodukt jeweils am Brunnenkopf oder - falls es sich um unterseeische Quellen handelt - auf einer oberhalb des Meeresspiegels angeordneten Plattform in seine Bestandteile zu trennen. Es erfolgt also in Gasabscheidern eine mit einer nichtenergetischen Entspannung verbundene Separation.

Da nicht davon ausgegangen werden kann, daß der am Bohrloch einer Erdölquelle zur Verfügung stehende Druck während einer gesamten Ausbeutungsphase dazu ausreicht, das Produkt zu einer Offshore-Plattform oder gar zu einer an Land gelegenen Stelle zu fördern, ist man bei unterseeischen Quellen zu einem besonderen konzept gelangt. Dieses sieht vor, daß ein am Bohrloch vorhandener überschüssiger Druck in einem Ventil abgebaut wird und der notwendige Transport zum Festland durch Arbeitsmaschinen erfolgt. Hierbei kann das Produkt in der gewonnenen Form, also ohne eine Trennung in seine Bestandteile, in "Multi-Phase-Flow" oder nach erfolgter Trennung in Öl und Gas in "Single-Phase-Flow" transportiert werden, wobei für das vermischte Produkt wie für das Erdöl Pumpen und für das Erdgas kompressoren zu verwenden sind.

Der Umstand, daß bei diesem konzept sehr viel elektrische Energie zum Antrieb der Arbeitsmaschinen benötigt wird, macht diese Lösung sehr aufwendig. Schließlich ist zu berücksichtigen, daß für den Transport des elektrischen Stromes bei dem bestehenden hohen Energiebedarf dicke Kabel notwendig sind. Gerade bei unterseeischen Kabelzuführungen erfordert dies besonders aufwendige Maßnahmen.

Durch die US-A 4 134 024 ist eine Vorrichtung bekannt, in welcher der nach der Trennung noch vorhandene Restdruck des flüssigen und des gasförmigen Bestandteiles in zwei mit Generatoren verbundenen Turbinen zur Erzeugung elektrischen Stromes genutzt wird. Der elektrische Strom wird nornehmlich zum Betrieb einer Trennanlage und zur Beheizung von Rohrabschnitten gebraucht. Letzteres geschieht, um der Gefahr einer durch die vorangegangene Druckabsenkung entstehenden Vereisung der Rohrleitungen zu begegnen. Im übrigen ist es möglich, mit einem eventuellen Überschuß elektrischen Stromes eine Pumpe zu betreiben, die flüssiges Förderprodukt zu der Trennanlage fördert. In der Trennanlage werden die vorher getrennten Bestandteile des Förderproduktes und gegebenenfalls von einer anderen Quelle kommendes unbehandeltes Förderprodukt zusammengeführt, um schließlich in verschiedenen Stufen in die Bestandteile Öl, Wasser und Gas getrennt zu werden.

Aus der vorstehenden Schilderung wird deutlich, daß der bei der vorbekannten Vorrichtung getriebene Aufwand relativ hoch ist. Vor allem ist festzustellen, daß die Nutzung der dem Förderprodukt entzogenen Energie in einer unzureichenden Weise erfolgt. Die für die Trennung in einen Flüssigkeits- und einen Gasstrom notwendige Entspannung bleibt ungenutzt. Die Menge der einzeln aufzustellenden Maschinen, der Rohrleitungen und Ventile beansprucht im übrigen eine Stellfläche, die in dieser Größe nicht immer ohne weiteres verfügbar ist. Hier ist vor allem an Förderplattformen von unterseeischen Erdölquellen zu denken. Eine Anordnung der vorbekannten Vorrichtung auf dem Meeresboden ist nicht vorgesehen. Sie wäre auch nur mit einem erheblichen Zusatzaufwand möglich.

Der Erfindung liegt die Aufgabe zugrunde, den durch eine Vorrichtung der eingangs genannten Art erzielten Energiegewinn in erheblichem Maße zu steigern.

Ausgehend von der Tatsache, daß der bei der Trennung des Förderproduktes in einen flüssigen und einen gasförmigen Bestandteil abgebaute Drucküberschuß einen meist großen Energieinhalt besitzt, löst die Erfindung die gestellte Aufgabe durch ein dem Brunnenkopf der Ölquelle nachgeschaltetes Aggregat, welches eine Energiegewinnungsturbine, eine Trennanlage für das im Druck reduzierte Förderprodukt und eine oder mehrere Arbeitsmaschinen zur Förderung eines oder der beiden getrennten Einzelbestandteile umfaßt.

Die erfindungsgemäße Vorrichtung hat einen geringen Platzbedarf. Sie kann an Land, auf einer Plattform oder, was besonders vorteilhaft ist, am Meeresboden in der Nähe des Bohrloches angeordnet werden. Dabei ist die Vorrichtung als sehr kompaktes Aggregat ausführbar. Dies wird auch aus den Unteransprüchen deutlich, welche vorteilhafte Ausgestaltungen der erfindungsgemäßen Vorrichtung nennen.

Anhand verschiedener Ausführungsbeispiele wird die Erfindung näher erläutert. Die Zeichnung zeigt sämtlich unter dem Meeresspiegel angeordnete Vorrichtungen zur Förderung von Erdöl und -gas. Im einzelnen zeigt die

Fig. 1 eine Vorrichtung bekannter Art mit "Multi-Phase-Flow", die

Fig. 2 eine Vorrichtung bekannter Bauart mit " Single-Phase-Flow", die

Fig. 3 eine erfindungsgemäße Vorrichtung mit einer vom Förderprodukt angetriebenen kraftmaschine und zwei Arbeitsmaschinen, die

Fig. 4 eine der Fig. 3 entsprechende Vorrichtung mit einem zusätzlichen Elektromotor zum Antrieb der Arbeitsmaschine, die

Fig. 5 eine der Fig. 3 entsprechende Vorrichtung, die zusätzlich mit einem der Stromerzeugung für entfernt liegende Aggregate dienenden Generator ausgestattet ist und die

Fig. 6 eine Variante der Vorrichtung der Fig. 3.

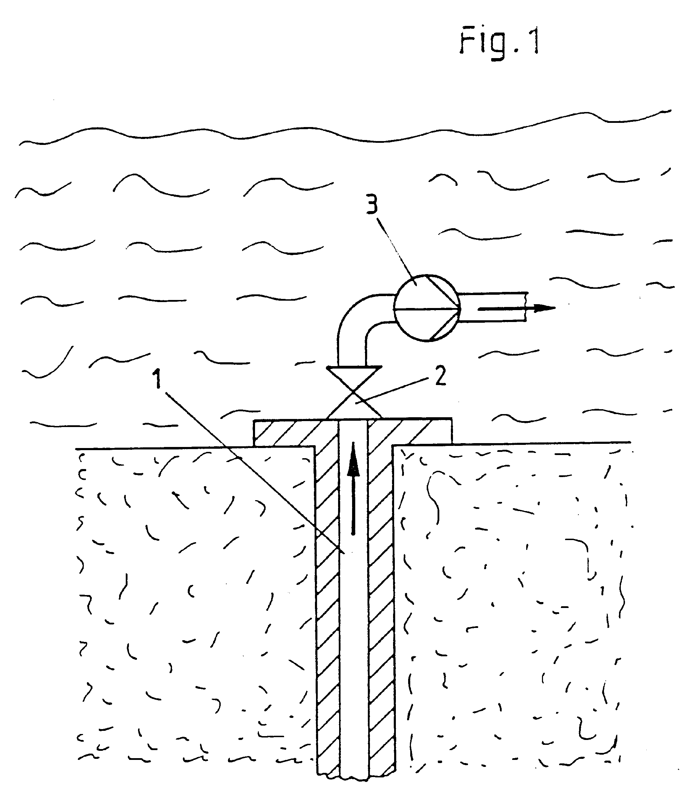

Die in der Fig. 1 dargestellte Vorrichtung stellt gewissermaßen die einfachste Form der Förderung für ein aus einem Bohrloch (1) strömendes Produkt dar. Das insbesondere aus Erdöl und -gas bestehende Gemisch strömt dabei über ein Druckreduzierventil (2), bevor es zu einer Förderpumpe (3) gelangt. Die Trennung in die Beständteile Öl und Gas erfolgt dann entweder auf einer oberhalb des Meeresspiegels angeordneten Plattform oder an Land. Das Druckreduzierventil (2) stellt sicher, daß die Belastung der Rohrleitung durch das Förderprodukt in zulässigen Grenzen bleibt.

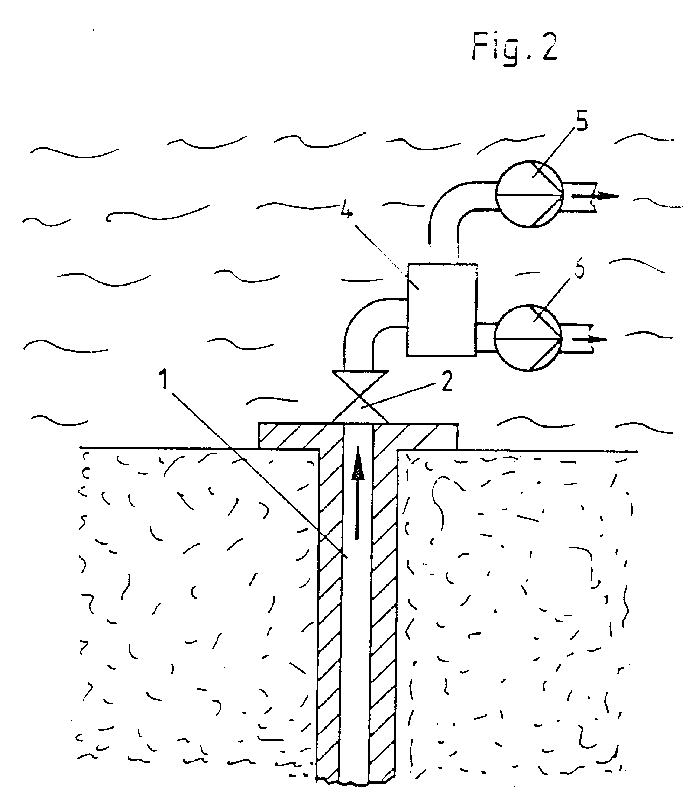

Bei der in der Fig. 2 dargestellten vorbekannten Vorrichtung erfolgt bereits in der Nähe des Bohrloches (1) eine Trennung in die Bestandteile Öl und Gas. Hierzu wird zunächst das Förderprodukt in einem Druckreduzierventil (2) auf einen Druck entspannt, der eine Abscheidung des Erdgases aus dem Produkt in einen Separator (4) erlaubt. Das im Separator (4) ausgeschiedene Gas wird von einem Kompressor (5) zu einer Plattform an Land gefördert, während das Öl von einer Pumpe (6) mit dem für eine Förderung notwendigen Druck beaufschlagt wird.

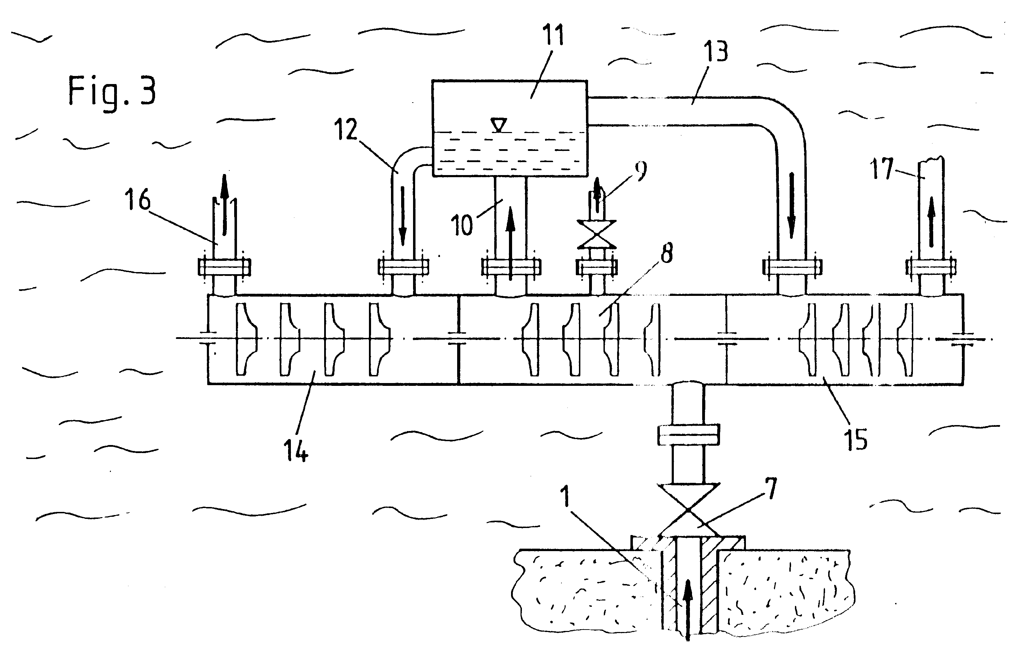

Die in der Fig. 3 dargestellte erfindungsgemäße Vorrichtung ist ebenfalls hinter einem auf dem Bohrloch (1) angebrachten Ventil angeordnet. Dieses Ventil (7) ist aber ein reines Absperrventil und dient nicht der Druckreduzierung wie die in den Fig. 1 und 2 dargestellten Ventile der vorbekannten Einrichtung. Die für die Trennung in die Bestandteile Gas und Öl notwendige Druckreduzierung wird hier in einer als Energiegewinnungsturbine (EGT) (8) wirkenden Kraftmaschine vorgenommen, die im Ausführungsbeispiel von einer rückwärtsdrehenden Kreiselpumpe gebildet wird. Zur Anpassung der EGT (3) an sich ändernde Parameter des Förderproduktes ist ein regelbarer Entnahmeanschluß (9) vorgesehen, der in die Ablaufleitung (10) der EGT (8) mündet.

Über die Ablaufleitung (10) gelangt das im Druck reduzierte Förderprodukt in einen Trennbehälter (11), von wo aus die Einzelbestandteile Erdöl und Erdgas über gesondere Rohrleitungen. (12) und (13) zu den der Förderung dienenden Arbeitsmaschinen gelangen. Die Arbeitsmaschinen sind auf gleicher Welle mit der Kraftmaschine angeordnet und werden von dieser angetrieben. So wird also das Erdöl von einer Kreiselpumpe (14) und das Erdgas von einem Verdichter (15) über Rohrleitungen (16) und (17) zu einer an Land befindlichen Station gefördert.

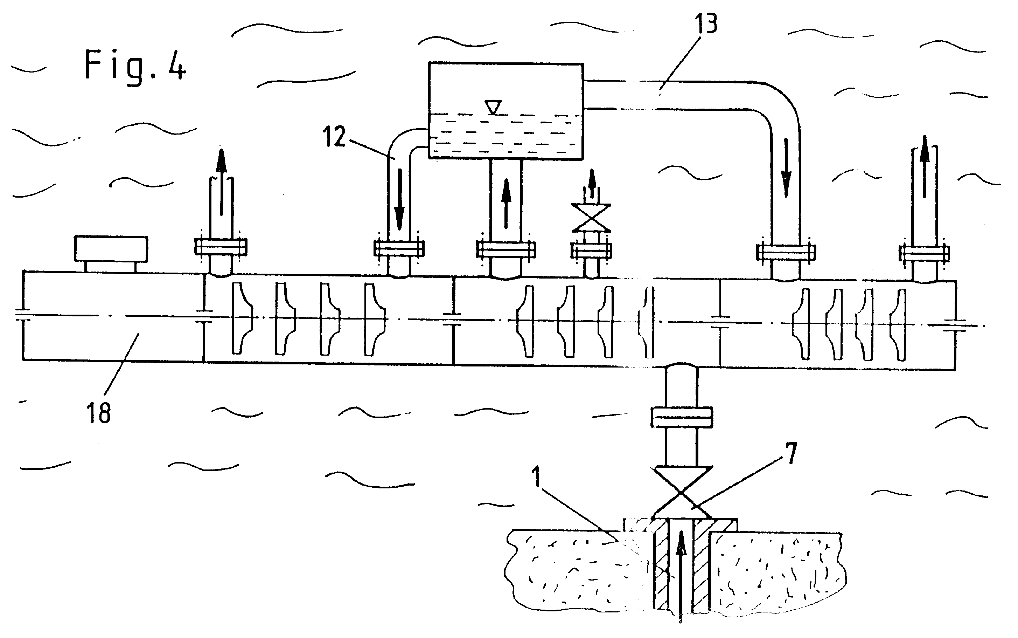

Die in der Fig. 4 dargestellte Vorrichtung entspricht grundsätzlich der Vorrichtung der Fig.3. Die Vorrichtung der Fig. 4 besitzt allerdings noch zusätzlich einen Elektromotor (18), der bei zu geringem Druck des Förderproduktes die noch zusätzlich zum Antrieb der Kraftmaschinen (14) und (15) notwendige Energie aufbringt. Ein solcher Elektromotor (18) muß selbstverständlich bei solchen Bohrlöchern vorgesehen werden, deren Druck schon zu Beginn der Ausbeutungsphase nicht zur Aufbringung der für den Antrieb der Arbeitsmaschinen notwendigen Energie ausreicht. Er kann aber auch vorsorglich bei solchen Feldern installiert werden, bei denen mit einer Druckabsenkung während der Ausbeutung zu rechnen ist. Da von dem Elektromotor (18) lediglich eine zusätzliche Energie aufzubringen ist, kann er relativ klein sein, das Kabel für die Stromversorgung bleibt dabei vergleichsweise dünn. Bei einer vorsorglichen Anordnung des Elektromotors (18), d. h. also bei einem über einen längeren Zeitraum erfolgenden Antrieb des Elektromotors (18) durch die EGT (8), läßt sich der Elektromotor (18) als Generator nutzen. Die erzeugte elektrische Energie kann dabei anderweitig eingesetzt werden.

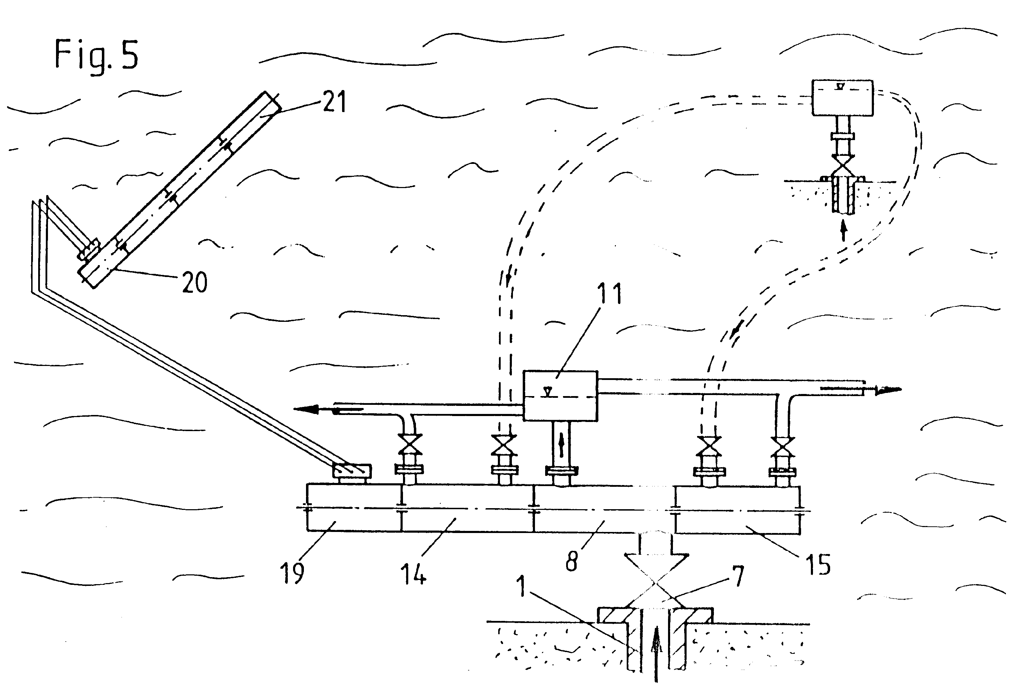

In der Fig. 5 ist eine erfindungsgemäße Vor richtung dargestellt bei der ein durch die EGT (8) angetriebener Generator (19) seinen Strom an den Elektromotor (20) eines weiteren erfindungs gemäß ausgebildeten Aggregates (21) liefert. Dieses Aggregat (21) entspricht der in der Fig. 4 dargestellten Vorrichtung. Das solchermaßen praktizierte Verbundsystem erspart komplizierte Kabelzuführungen von einer Plattform oder von der Küste her.

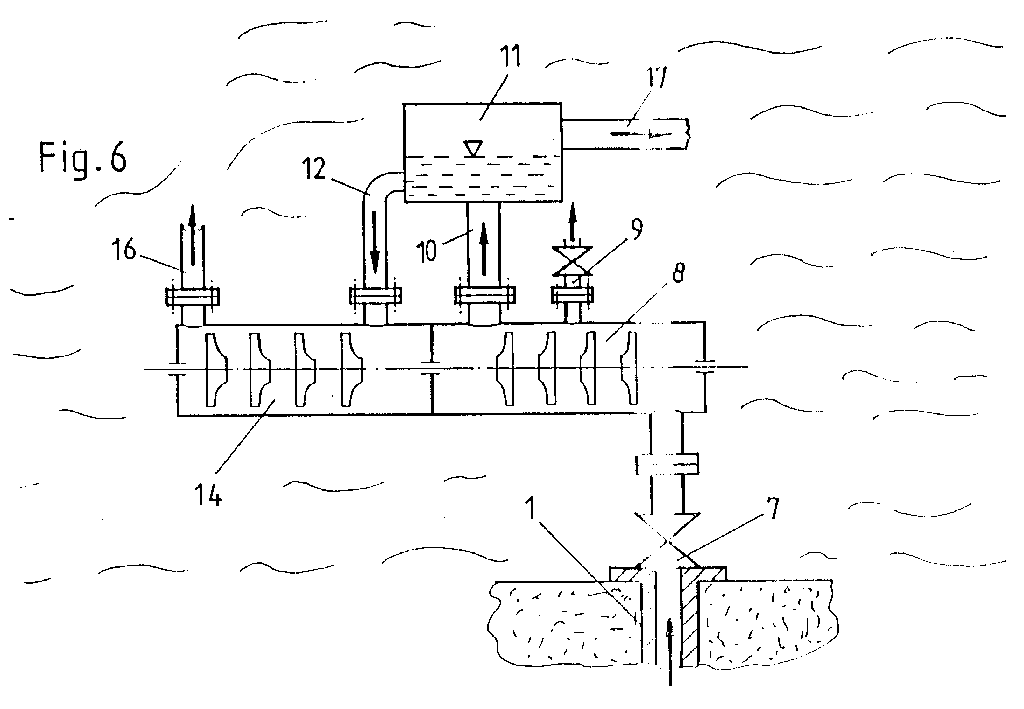

Die in der Fig. 6 dargestellte Variante arbeitet ebenfalls mit einer EGT (8) und einer Pumpe (14), verzichtet aber auf einen Kompressor zur Förderung des in einem Trennbehälter (11) ausgeschiedenen Erdgases. Hier wird das aus dem Bohrloch (1) strömende Mehrphasengemisch in der EGT (8) auf einen Druck entspannt, der noch ausreichend hoch ist, um das Erdgas ohne Hilfsmittel zu einer auf einer Plattform oder an Land befindlichen Station zu fördern.

Die in den Ausführungsbeispielen dargestellten Vor richtungen lassen sich selbstverständlich an andere individuelle Einsatzbedingungen anpassen. So kann beispielsweise eine der Energiegewinnung dienende erste Druckabsenkung am Bohrloch erfolgen, während eine zweite, der Trennung des Förderproduktes unmittelbar vorausgehende Druckabsenkung auf einer Förderplattform vorgenommen wird.

Es ist im übrigen zwar vorteilhalt, die erfindungsgemäße Vor richtung in der Nähe des Borhrloches anzuordnen, dies ist aber keine Voraussetzung für die Nutzung der Erfindung. Grundsätzlich kann eine solche Einrichtung auch auf einer Förderplattform oder an Land angeordnet sein.

## Patentansprüche

1. Der Mündung einer Quelle gasbeladenen Erdöls nachgeschaltete Vorrichtung, die mindestens eine Turbine bzw. eine Turbinenstufe und einen von dieser angetriebenen Generator umfaßt, durch welche ein Teil der in dem aus der Quelle austretenden Erdöl in Form eines Drucküberschusses enthaltenen Energie in elektrische Energie umgewandelt wird, in der weiterhineine Einrichtung zur Trennung des im Druck reduzierten Erdöls vom darinenthaltenen Gas vorgesehen ist und in der schließlich mindestens eine Pumpenstufe zur Förderung entgasten Erdöls vorhanden ist, welche durch dem austretenden Erdöl entzogene Energie angetrieben wird, **gekennzeichnet durch** ein Aggregat, welches im wesentlichen besteht aus einer vom gasbeladenen Erdöl durchströmten Energiegewinnungsturbine (8), in welcher die für die Trennung von Erdöl und -gas notwendige Druckabsenkung erfolgt, einem nachgeschalteten Trenn- behälter (11) und einer oder mehreren Arbeitsmaschinen (14, 15) zur Förderung eines oder der beiden getrennten Einzelbestandteile.

2. Vorrichtung nach Anspruch 1, dadurch gekennzeichnet, daß die Energiegewinnungsturbine (8) eine rückwärtsdrehende Kreiselpumpe ist.

3. Vorrichtung nach Anspruch 1 und einem oder beiden folgenden Ansprüchen, dadurch gekennzeichnet, daß die Energiegewinnungsturbine (8), die Arbeitsmaschinen (14, 15) und gegebenenfalls vorhandene elektrische Maschinen (18, 19) auf einer gemeinsamen Welle angeordnet sind.

4. Vorrichtung nach Anspruch 1 und einem oder mehreren der folgenden Ansprüche, dadurch gekennzeichnet, daß die Energiegewinnungsturbine (8) einen oder mehrere mit Ventileinrichtungen versehene Entnahmeanschlüsse (9) besitzt, welche, jeweils von einer Zwischenstufe der Energiegewinnungsturbine (8) ausgehend, in die Ablaufleitung (10) der Energiegewinnungsturbine (8) münden.

5. Vorrichtung nach den Ansprüchen 1 und 4, dadurch gekennzeichnet, daß eine oder mehrere der Entnahmeanschlüsse (9) mit einer regelbaren Ventileinrichtung ausgestattet sind.

6. Vorrichtung nach Anspruch 1, gekennzeichnet durch eine Ableitung des erzeugten elektrischen Stromes zu einer von der Quelle entfernt gelegenen Stelle.

7. Vorrichtung nach den Ansprüchen 1 und 6, gekennzeichnet durch eine zu den Fördereinrichtungen einer weiteren Ölquelle führende elektrische Leitung.

## Claims

1. A device arranged downstream from the opening of a source of gas-charged petroleum, said device comprising at least one turbine or, respectively, a turbine stage and a generator driven by the same, by means of which a part of the energy contained in the petroleum emerging from the source in the form of excess pressure is converted into electrical energy, and in which furthermore there is a means for separating the petroleum, reduced in pressure, from the gas contained therein and in which finally at least pump stage is present, which is driven by the energy from the emerging petroleum, for pumping degassed petroleum, characterized by a unit which consists essentially of an energy producing turbine (8), through which the gas-charged petroleum flows, in which turbine the lowering of the pressure necessary for the separation of the petroleum and the gas, of a following separation container (11) and of one or more machines (14 and 15) for conveying one or both separate individual components.

2. The device as claimed in claim 1, characterized in that the energy producing turbine (b) is a centrifugal pump with a reverse direction of rotation.

3. The device as claimed in claim 1 and one or the two following claims, characterized in that the energy producing turbine (8), the said machines (14 and 15) and any electrical machines (18 and 19) present are arranged on a common shaft.

4. The device as claimed in claim 1 and one or more of the following claims, characterized in that the energy producing turbine (8) has one or more output connections (9) provided with valve means and which, respectively running from an intermediate stage of the energy producing turbine (8), open into the output duct (10) of the energy producing turbine (8).

5. The device as claimed in claims 1 and claim 4, characterized in that one or more output connections (9) are fitted with an adjustable valve means.

6. The device as claimed in claim 1, characterized by an output conductor for the electrical current produced and leading to a point remote from the source.

7. The device as claimed in claims 1 and 7, characterized by a further electrical conductor leading to the pumping means of a further oil source.

**Revendications**

1. Dispositif, placé en aval de l'orifice d'une source de pétrole chargé de gaz, comprenant au moins une turbine ou un étage de turbine et un générateur entraîné par cette dernière, dispositif par lequel une partie de l'énergie du pétrole sortant de la source et contenue sous forme d'excédent d'énergie est transformée en énergie électrique et dans lequel est prévu, en plus, un équipement pour séparer le pétrole réduit sous pression du gaz qu'il contient et dans lequel, enfin, se trouve au moins un étage de pompe pour extraire le pétrole dégazé, étage qui est entraîné par l'énergie tirée du pétrole sortant, caractérisé en ce qu'un agrégat est formé en majeure partie d'une turbine (8) de production d'énergie traversée par le pétrole chargé de gaz dans laquelle la baisse de pression nécessaire pour la séparation du pétrole et du gaz naturel, formé d'un réservoir (11) en aval et d'une ou de plusieurs machines motrices (14, 15) de refoulement d'un ou des deux composants séparés.

2. Dispositif selon la revendication 1 caractérisé en ce que la turbine de production d'énergie (8) est une pompe centrifuge à rotation inverse.

3. Dispositif selon la revendication 1 et un ou deux des revendications suivantes caractérisé en ce que la turbine de production d'énergie (8), les machines motrices (14, 15) et éventuellement des machines électriques existantes (18, 19) sont situées sur un arbre commun.

4. Dispositif selon la revendication 1 et une ou plusieurs des revendications suivantes caractérisé en ce que la turbine de production d'énergie (8) possède un ou plusieurs raccords de prise (9) munis de dispositifs de soupapes qui, partant à chaque fois d'un étage intermédiaire de la turbine de production d'énergie (8), aboutissent à la conduite de sortie (10) de la turbine de production d'énergie (8).

5. Dispositif selon les revendications 1 et 4 caractérisé en ce que un ou plusieurs raccords de prise (9) sont équipés d'un dispositif réglable de soupapes.

6. Dispositif selon la revendication 1 caractérisé par une dérivation du courant électrique produit vers un point éloigné de la source.

7. Dispositif selon les revendications 1 et 6 caractérisé par une ligne électrique conduisant aux dispositifs de refoulement d'une autre source de pétrole.

Fig.1

Fig. 2

Fig. 3

Fig. 4

Fig.5

Fig.6

EP 0 407 408 B1